# EUROPEAN PATENT APPLICATION

(11) **EP 2 725 327 A1**
(43) Date of publication of application: **30.04.2014**
(21) Application number: 12190396.7
(22) Date of filing: 29.10.2012
(51) Int. Cl.: G01F 1/66

(54) **Ultrasonic flow meter with reflector surface with reduced symmetry**

(71) Applicant: Kamstrup A/S, 8660 Skanderborg (DK)
(72) Inventor: Borring, Peter, 7100 Vejle (DK)
(74) Representative: Plougmann & Vingtoft A/S

(57) **Abstract**

The invention relates to an ultrasonic flow meter for flow measurements of a liquid flow as used e.g. in a consumption meter. The flow meter comprises at least two reflectors arranged inside the flow passage where the reflector surface is shaped so that it comprises zero or one mirror symmetry axis. In embodiments the reflector shape is divided into two parts separated by a mid-axis so that the surface area of the first part of the reflector surface is larger than the surface area of the second part of the reflector surface, in a manner so that the reflector shape is narrowed at one end as compared to the other end.

## Description

### FIELD OF THE INVENTION

The invention relates to an ultrasonic flow meter for flow measurements of a liquid flow as used e.g. in a consumption meter.

### BACKGROUND OF THE INVENTION

Utilities supplied from a public system are normally metered at the end-user site for billing purposes. For example, supplied hot or cold water is metered by a water meter, and supplied district heating is metered by a heat meter. There are several types of utility meters in common use, and one type is an ultrasonic flow meter. An ultrasonic flow meter uses ultrasonic transducers to emit ultrasonic signals into the flowing medium in order to measure the flow rate, or other parameters of the flowing medium.

An ultrasonic flow meter is mounted in-line in the distribution pipe system. Such utility meters will have a housing for providing a flow passage of the fluid flowing in the pipe system, as well as a housing for flow meter components.

In some ultrasonic flow meters, the ultrasonic signals are guided on a path which is not along a direct line between the sending and receiving ultrasonic transducer, but instead travel along a piecewise linear path where the direction is altered by at least one reflection along the way. This requires at least one reflective surface, but typically two or more surfaces, which reflects the ultrasonic signals upon incidence to direct the signal along the desired path.

The reflectors are normally mounted in the liquid stream, and therefore occlude for the streaming liquid. This gives rise to an undesired but inevitable pressure drop.

### SUMMARY OF THE INVENTION

It would be advantageous to achieve an ultrasonic flow meter with a low pressure drop over the flow distance. In general, the invention seeks an alternative to the prior art in order to mitigate, alleviate or eliminate one or more disadvantages, singly or in any combination, of the prior art.

In a first aspect of the invention, there is provided an ultrasonic flow meter arranged to measure a flow rate of a liquid, the meter comprising:
- a housing having a through-going opening arranged as a flow passage of the fluid,
- at least two ultrasonic transducers arranged for emitting and receiving ultrasonic signals,
- at least two reflectors arranged inside the flow passage, the at least two reflectors comprises a reflector surface arranged to reflect the ultrasonic signal emitted from an emitting ultrasonic transducer, so that the ultrasonic signal is directed along the flow passage to be received at a receiving ultrasonic transducer, and wherein the reflector surface is shaped so that it comprises zero or one mirror symmetry axis.

In an ultrasonic flow meter of the type in accordance with the embodiments of the invention, the reflector is used to direct the ultrasonic signal along and against the flow. In principle the reflector should be as large as possible in order to direct as much signal as possible into the flowing liquid. However, the presence of the reflector also creates an obstruction for the flowing liquid which introduces an undesired pressure drop across the flow distance. By providing an ultrasonic flow meter wherein the reflector surfaces of the reflectors comprises zero or one mirror symmetry axes, embodiments of the present invention can be provided which enable a compromise between providing a large reflective surface area and a reduced obstruction, under the constraint that the signal field area should covers a sufficient large part of the entire flow.

In embodiments the reflector shape may be divided into two parts separated by a mid-axis so that the surface area of the first part of the reflector surface is larger than the surface area of the second part of the reflector surface, in a manner so that the reflector shape is narrowed at one end as compared to the other end. In the narrowed region, the flow passage is increased which gives rise to a lower pressure drop as compared to a reflector shape where the first and second part are symmetric around the mid-axis. In an important embodiment, a single symmetry axis is provided to provide a mirror symmetric reflector shape with a reduced surface area at one end.

In further important embodiments, the reflectors are held by support structures. In this situation the occlusion arises from the combined shape of the reflector and the support structure. The shape of the reflector enables a shaping of the support structure to closely follow the shape of the reflector and thereby also in this situation provides areas with larger flow passages to reduce the pressure drop across the measurement distance.

In a second aspect of the invention, an insert for arrangement inside a flow passage of an ultrasonic flow meter is provided. The insert may be arranged inside the flow meter of the first aspect.

In embodiments, the ultrasonic flow meter may be or may be part of a charging consumption meter or utility meter, e.g. a water meter for cold and/or hot water, heat meter, cooling meter, energy meter or smart meter, where the consumption meter is arranged for measuring consumption data of a supplied utility used as a basis for billing. The consumption meter may be used in connection with district heating, district cooling and/or distributed water supply. The consumption meter may be a legal meter, i.e. a meter which is subdued to regulatory demands. Such regulatory demands may be demands to the precision of the measurements.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a schematic cross-section of elements of an ultrasonic flow meter.
Fig. 2 illustrates a perspective view of an insert, and Fig. 3 illustrated the insert of Fig. 2 in a top view.
Fig. 4 illustrates an embodiment of a reflector shape in accordance with the prior art.
Fig. 5 and 6 illustrate reflector shapes in accordance with embodiments of the present invention.
Fig. 7 shows a schematic projection view of the opening of the measuring tube, the projection of the reflector surface of Fig. 5A onto the plane of the tube opening and an indication of cut-away areas.
Fig. 8 and Fig. 10 illustrate three schematic views of reflector towers which supports and holds the reflector surface.
Fig. 9 illustrates the cross sectional shape of the reflector tower overlaid on the cross sectional shape of the reflector tower is three cross sections of the reflector.

### DESCRIPTION OF EMBODIMENTS

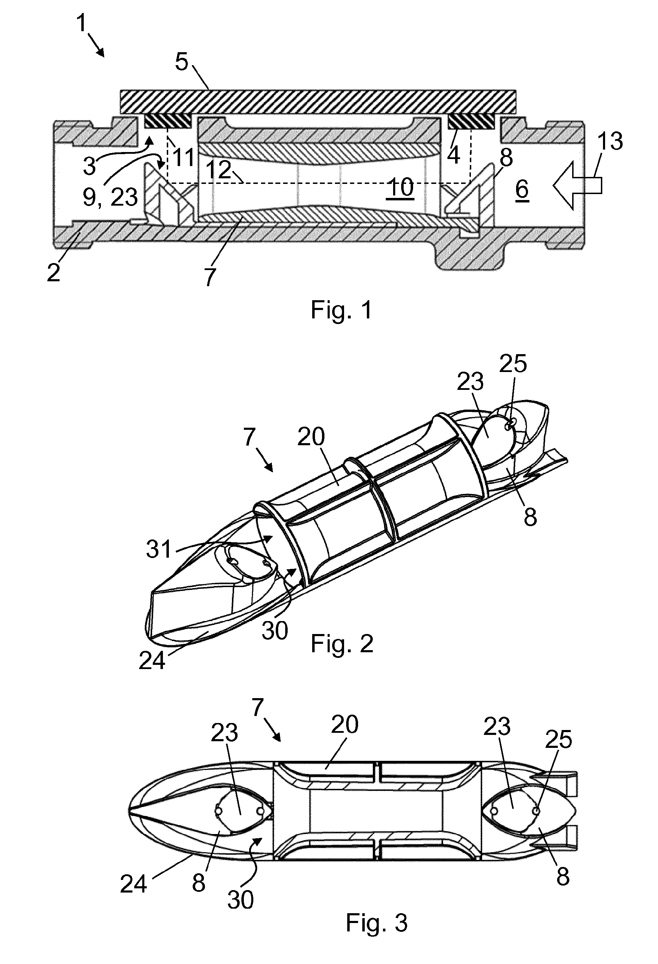

An embodiment of the invention is illustrated in Fig. 1.

The figure shows a schematic cross-section of elements of an ultrasonic flow meter 1. The flow meter comprises a housing 2 or flow tube which defines a through-going opening 6 for receiving a liquid flow 13. The through-going opening defines a straight flow passage along a centre axis 12 of the flow passage. The housing 2 further comprises two openings 3 arranged to receive respective ultrasonic transducers 4. In the shown embodiment, the two transducers are mounted on an electronic circuit in the form of a PCB 5 with measurement circuit electrically connected to the transducers and arranged to operate them. Additional elements, such as protection membranes for the transducers and sealing elements, may be present in an operating flow meter. Likewise in an operating flow meter, further elements, such as further electronic elements are normally present together with one or more casings or houses for housing the elements.

The flow meter further comprises an insert 7 which comprises a reflector arrangement 8 arranged as reflector towers for supporting the two reflectors 9 and a measuring tube 10 defining a flow channel for the liquid. The illustrated insert is made up of two parts, one part being a reflector part which comprises the two reflector towers, and the second part being the measuring tube part.

In the illustrated embodiment, the reflectors are mounted on reflector towers. In other embodiments the reflectors may be mounted by a support structure in the form of a suspension which holds the reflectors inside the flow tube by means of one or more gripper arms which are attached to (or combined with) the reflectors at one end, and which are held inside the flow tube at the other end.

The ultrasonic flow meter is a transit time flow meter arranged to measure a flow rate of a liquid flowing in the flow channel 6 by use of the known operation principle for transit time flow meters, where ultrasonic signals are emitted at one transducer and received at the other transducer, and where the difference in time-of-arrival between oppositely propagating signals is measured and converted into a flow rate. The piezoelectric transducers are operated by the control circuit 5, which based on the involved signals generate a signal or value indicative of the flow rate of the liquid. The level of signal treatment of the control circuit may vary from basic signal treatment, where processed signals are output to a further electronic unit for further signal processing, to a complete signal treatment resulting in the determination of the flow rate. Such further electronic unit may be part of the flow meter 1, or may be part of a separate calculator circuit (not shown) communicatively connected to the flow meter.

In the illustrated embodiment transducer openings 3 are provided in the flow tube 2, in other embodiments may the transducers be arranged at an outside of the flow tube to emit signal through the wall of the flow tube. The flow tube and the housing for the electronic elements may be provided as separate elements, or as formed in one unit which comprises both house for electronics as well as the flow tube. The housing elements including the flow tube 2 may be made of a polymeric material or of a metallic material.

In the illustrated embodiment the transducers are arranged to emit the ultrasonic signal along axes 11 which are perpendicular to the flow axis 12 or centre axis of the flow meter. The axis 11 is defined as the axis from the centre of the ultrasonic transducer along the surface normal of the ultrasonic transducer. This axis extends through the reflector surface. The reflecting surfaces of the reflectors 9 are angled 45° relative to the flow axis 12. Depending on the specific embodiment, the angling may be different as long as the reflectors direct the ultrasonic signal emitted from the emitting ultrasonic transducer along the flow passage to be received at the receiving ultrasonic transducer.

A liquid flow 13 entering the flow tube sees an obstruction in the form of the elements of the flow insert 7. The presence of the flow insert gives rise to a pressure drop across the flow distance provided by the flow meter. Embodiments of the present invention reduce this pressure drop. In this respect, even if the reflectors are suspended by relative thing suspension arms, the presence of the reflects together with the suspension means also give rise to a pressure drop.

Fig. 2 illustrates a perspective view of an insert 7 in accordance with embodiments of the present invention. The figure shows an insert that comprises a measuring tube 20, which reduces the diameter of the flow tube. The insert further comprises two reflector towers 8 which comprise a support structure or holder structure which supports and holds the reflector 23. The reflector may be provided by a metal mirror attached to the support structure. The reflectors are provided with small recesses or notched which are used for gripping and supporting the reflectors during manufacture. In general, however, such notched may be avoided if desired for the manufacturing process. The reflector towers are formed on a curved plate 24 which is formed also to carry the measuring tube 20. The holder plate maintains the reflector towers a fixed distance apart. The reflector towers 8 may in an embodiment be cast together with the holder plate 24 in a single casting step using a single casting mould to form a monolithic unit.

Fig. 3 illustrates the insert of Fig. 2 in a top view, however with a cut-through through the measuring tube 20 for illustrative purposes.

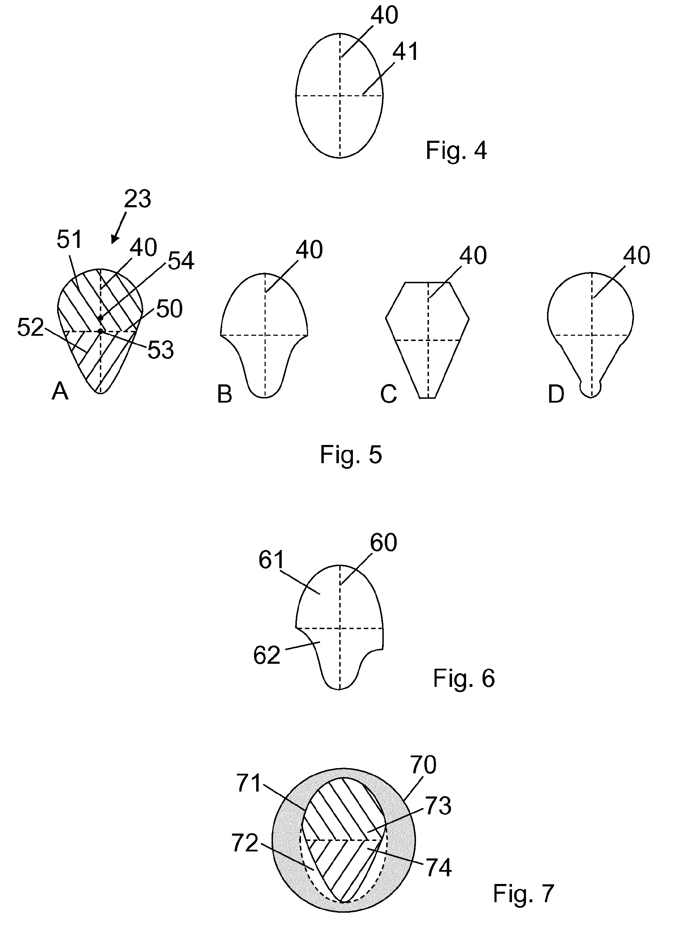

Fig. 4 illustrates an embodiment of a reflector shape in accordance with the prior art, whereas the figures of Fig. 5 and 6 illustrate reflector shapes in accordance with embodiments of the present invention.

Fig. 4 illustrates an elliptic shaped reflector as is generally used in the art, such a reflector has two symmetry axes 40, 41. Other known reflector shapes are circular shapes which are rotational symmetric and square or rectangular shapes which also have two symmetry axes.

Figures 5A to 5D illustrate reflector shapes where the reflector surface has one symmetry axis 40, whereas the reflector surface of Fig. 6 has zero symmetry axes. In general, the reflector surface shapes with one symmetry axis are preferred shapes. The figures illustrate the bounding or envelope shapes. In embodiments, notches (as ref. 25 in Fig.3) may be provided for mounting purposes.

The reflector shapes has a height axis 40 which is defined as the height of the reflector taken along the longest side. The height is normally the height of the bounding or envelope shape, so that if mounting notches are present, the height is the height of the reflector without these notches.

A mid-axis 50 is defined as the axis which is perpendicular through a centre point of the height axis of the reflector surface. The mid-axis separates the reflector surface in a first part 51 and a second part 52. In important embodiments of the present invention, the surface area of the first part of the reflector surface is larger than the surface area of the second part of the reflector surface.

The reflector shapes of Figs. 5 comprise one mirror symmetry axis 40, in this situation the height axis coincide with the mirror symmetry axis. In this situation the parts of the reflector surface are defined by splitting the surface into a first part 51 and a second part 52 by a mid-axis 50 perpendicular to the mirror symmetric axis through the centre point 53 of the symmetry axis 40.

In a similar manner in Fig. 6, even though no symmetry axis is present, a height axis 60 can be defined where a mid-axis can be defined that split up the surface in a first part 61 with a larger surface area than a second part 62.

The reflector shapes in embodiments are oblong along a (height) axis 40, 60, however with a general shape so that they are wider at one end than at the other end, this amount to that the centre of mass 54 for the reflector surface is located displaced from the centre point 53 of the height axis. In the situation of a single symmetry axis, the centre of mass is displaced along the symmetry axis towards the first part and placed on the symmetry axis.

Fig. 7 illustrates a possible effect of the reflector surface in accordance with embodiments of the present invention. The figure is a schematic projection view which illustrates the opening of the measuring tube 70, the projection 71 of the reflector surface of Fig. 5A onto the plane of the tube opening and an indication of cut-away areas 72.

In an ultrasonic flow meter of the type in accordance with the embodiments of the invention, the reflector is used to direct the ultrasonic signal along and against the flow. In principle the reflector should be as large as possible in order to direct as much signal as possible. However, the presence of the reflector also creates an obstruction for the flowing liquid which introduces an undesired pressure drop across the flow distance. Embodiments of the present invention provide a compromise between providing a large reflective surface area by the first part 73 and a reduced obstruction by the second part 74, which nevertheless still provides a reflective surface area, so that the signal field area covers a large part of the entire flow.

As is schematically illustrated in Fig. 7, the first part 73 ensures a large reflective area for a central part of the signal field, whereas the second part 74 has a reduced surface area and therefore provides a larger flow area as compared to an elliptic mirror or circular mirror as is normally used.

In a situation where the reflector surface is inclined or tilted so that the second part of the reflector surface is rotated towards a centre point of the flow meter, the flow passage in the area between the reflector and the entrance of the flow tube is somewhat smaller in the area of the reflector end which is closer towards the measurement tube, i.e. the bottom area, than at the area of the reflector end which is further away from the measurement tube, i.e. the top area. This aspect can be seen in Figs. 2 and 3, where it can be seen in the area pointed by numeral 30 that the flow passage is smaller in the bottom narrow region of the reflector than in the wider upper region of the reflector, as pointed by numeral 31.

The shaping of the reflector is a compromise between reflective area and flow passage, so a given limit depends on design choices, however generally the surface area of the first part of the reflector surface is at least 5% larger than the surface area of the second part of the reflector surface. Generally the surface area of the first part of the reflector surface may be as large as 250% larger than the surface area of the second part of the reflector surface. In embodiments, between 48% of the total reflective area and 30% of the total reflective area is provided at the second part. In a situation of 48% of the total reflective area at the second part, the flow passage is not largely increased, however if the flow passage reflector is positioned close to the measurement tube as shown in Figs. 2 and 3, such an area reduction may have a positive effect on the pressure drop. In a situation of 30% of the total reflective area at the second part, the contribution from the this part to the total signal is small but nevertheless contributes positive to the total signal field distribution.

Fig. 7 shows a schematic projection of the plane of the opening of the measuring tube 70. This plane is the plane of the flow passage taken perpendicular to the direction of the flow passage along the centre axis. A projection of the reflector surface 71 onto the plane 70 of the flow passage is so that the projection of the reflector surface covers a larger part of the plane of the flow passage at one half 71 of the plane of the plane, than at the other half 72 of the plane.

Fig. 5A illustrates an important reflector surface shape, namely a rounded droplet shape which comprises an envelope shape with a first end defined by a first curvature with a first radius of curvature, and a second end defined by a second curvature with a second radius of curvature, and where the two curved ends are combined by straight or substantially straight segments. Such a shape may also be referred to as a pear shape or an elongated egg shape.

In the embodiments of Figs. 1 to 3, the reflector surface 23 is held or supported by a support structure 8, also referred to as a tower or reflector tower. The support structure has a base structure which is fixed at the inner surface of the flow tube and a protruding end which projects into the flow tube, the reflector being position on the protruding end. The support structure provides a barrier for the liquid flow. An important advantage of the present invention is that due to the shape of the reflector with a reduced surface area at one end, also the size of the support structure can be reduced. In particular the volume of the support structure in the end of the reflector with a reduced surface area can be reduced and thereby provides a larger flow passage in this area as compared to an elliptic or other shape.

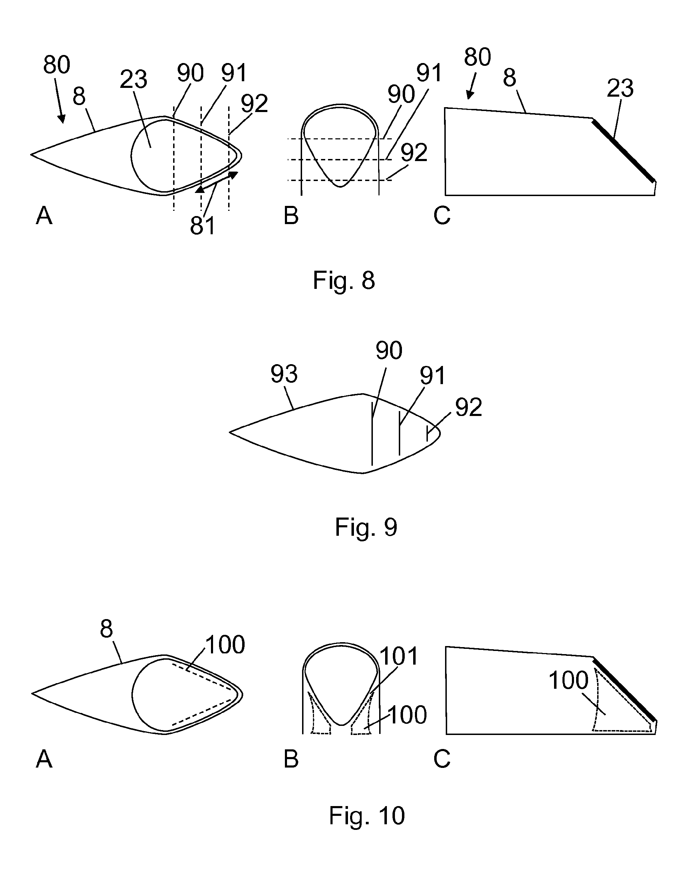

Fig. 8 illustrates the reflector tower 8 or support structure 8 which supports and holds the reflector surface 23 in three schematic views. Fig. 8A shows a schematic top view of the support structure for the reflector tower positioned upstream of the liquid flow in a situation of use. The reflector tower 8 comprises a front fin 80 which is used to ensure a laminar flow, or at least reduce the flow vortices which arise from the presence of the structure. Fig. 8B show a schematic front view of the support structure, and Fig. 8C shows a schematic cross section through the support structure. As is illustrated in Fig. 1, the reflector tower 8 positioned upstream need not be provided with a front fin. Moreover, other structures than the fin structure may be used to improve the liquid flow around the reflector tower.

In an embodiment, at least the lower half 81 of the reflector surface, the width of the support structure in any cross-sectional area along the surface normal of the ultrasonic transducer is less than 5% larger than the corresponding width of reflector surface. Preferably, the width of the support structures is as small as possible as compared to the width of the reflector surface for any cross section. This is illustrated in Fig. 9 which shows the cross sections 90, 91 and 92 along the sections shown on Figs 8A and 8B. In general the outer shape of the support structure may follow closely the shape of the reflector in the narrow region (second part).

Fig. 9 illustrates the cross sectional shape 93 of the reflector tower which is the same for all cross sections along the reflector, overlaid on the cross sectional shape of the reflector tower is the three cross sections of the reflector 90, 91 and 92 which shows that the distance between the edge of the reflector and the reflector tower is small for all cross sections along the reflector.

Fig. 10 illustrates the reflector tower 8 in three different views in a similar manner as Fig. 8. However, in addition to Fig. 8, the support structure or reflector tower comprises a narrowed region 100 below an edge 101 surrounding at least the edge of the lower half of the reflector surface. Thus the reflector tower comprises tracks in the side of the reflector tower in the region of the second part of the reflector. The presence of such tracks reduces even further the size of the reflector tower, in particular it reduces the size of the reflector tower in the same area as the reflector has a reduced size to further improve the flow properties of the liquid to reduce the pressure drop.

Returning to Figs. 1 to 3, the illustrated embodiment comprises an insert 7. The insert comprises the reflector arrangement defined by the two reflector towers 8 supporting the at least two reflectors 9, 23. The reflectors are mounted on a holder plate 24. In an embodiment, the inner wall of the flow passage may define the flow passage. However, in important embodiments, the insert further comprises a measuring tube 20 which defines the flow channel for the liquid. The measuring tube will normally provide a flow tube with a reduced diameter as compared to the diameter of the flow passage. The insert may be provided as a sub-assembly which can be sub-assembled separate from the housing and secured in the housing by insertion from one end of the through-going opening as a unit.

The illustrated embodiments comprises two reflectors surfaces arranged so to opposes each other, tilted at an angle of 45° with respect to the direction of the surface normal of the transducer surfaces.

The insert may be provided in a polymer material. However in general other material types may be used. For example a metal insert may be used. In the illustrated embodiments, separate reflectors are illustrated. However, the reflectors may be provided by a surface of the insert. In particular a metallic insert may provide reflective surfaces used as reflectors. However, it is envisioned that also certain polymeric materials or other material types may be used which has a sufficient reflectivity to ultrasonic signals so that reflectors can be provided by the insert itself.

In the illustrated embodiments, an insert in the form of a sub-assembly where the reflector towers are formed together with a holder plate, which also support as measurement tube, is disclosed. While this illustrates a preferred embodiment, the invention is not limited to this. In particular, embodiments where separate reflector towers are mounted in the flow tube can also be envisioned.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. An ultrasonic flow meter arranged to measure a flow rate of a liquid, the meter comprising:
- a housing having a through-going opening arranged as a flow passage of the fluid,
- at least two ultrasonic transducers arranged for emitting and receiving ultrasonic signals,
- at least two reflectors arranged inside the flow passage, the at least two reflectors comprises a reflector surface arranged to reflect the ultrasonic signal emitted from an emitting ultrasonic transducer, so that the ultrasonic signal is directed along the flow passage to be received at a receiving ultrasonic transducer,
wherein the reflector surface is shaped so that it comprises zero or one mirror symmetry axis.

2. The ultrasonic flow meter according to claim 1, wherein a mid-axis is defined as an axis which is perpendicular through a centre point of a height axis of the reflector surface, and wherein the mid-axis separates the reflector surface in a first part and a second part, and wherein the surface area of the first part of the reflector surface is larger than the surface area of the second part of the reflector surface.

3. The ultrasonic flow meter according to any of the preceding claims, wherein the height axis is a mirror symmetry axis of the reflector surface

4. The ultrasonic flow meter according to any of the preceding claims, wherein the reflector surface shape is the bounding shape without notched used for mounting.

5. The ultrasonic flow meter according to any of the preceding claims, wherein the reflector surface is oblong along a height axis, and wherein the reflector surface has a centre of mass located displaced from the centre point of the height axis.

6. The ultrasonic flow meter according to any of the claims 2 to 5, wherein the reflector surface is inclined so that the second part of the reflector surface is rotated towards a centre point of the flow meter.

7. The ultrasonic flow meter according to any of the claims 2 to 6, wherein the first part is between 5% and 250% larger than the second part.

8. The ultrasonic flow meter according to any of the preceding claims, wherein the reflector is supported by a support structure which supports and holds the reflector surface.

9. The ultrasonic meter according to claim 8, wherein for at least half of the second part of the reflector surface, the width of the support structure in any cross-sectional area along a surface normal of the ultrasonic transducer is less than 5% larger than the corresponding width of reflector surface.

10. The ultrasonic flow meter according to any of the claims 8 or 9, wherein the support structure comprises a narrowed region below an edge surrounding at least the edge of the second part of the reflector surface.

11. The ultrasonic flow meter according to any of the claims 8 to 10, wherein the support structure is cast as a single monolithic structure.

12. The ultrasonic flow meter according to any of the preceding claims, wherein the flow meter further comprises an insert, and wherein the insert comprises at least two support structures supporting the at least two reflectors and a holder plate supporting the at least two support structures in fixed positions, and wherein the insert is cast as a single monolithic structure.

13. The ultrasonic flow meter according to claim 12, wherein the insert further comprises a measuring tube defining a flow channel for the liquid with a reduced diameter as compared to the diameter of the flow passage.

14. The ultrasonic flow meter according to any of the preceding claims, wherein at least the reflector mounted upstream to a flow direction is provided with a front fin to reduce creation of vortices due to the presence of the reflectors in a liquid stream.

15. An insert for arrangement inside a flow passage of an ultrasonic flow meter, wherein the insert comprises at least two support structures supporting at least two reflectors and a holder plate supporting the at least two support structures in fixed positions, wherein the at least two reflectors comprises a reflector surface arranged to reflect an ultrasonic signal emitted from an associated emitting ultrasonic transducer, so that the ultrasonic signal is directed along the flow passage to be received at an associated receiving ultrasonic transducer, and wherein the reflector surface is shaped so that it comprise zero or one mirror symmetry axis.
